# EUROPÄISCHE PATENTSCHRIFT

(11) **EP 2 574 384 B1**
(45) Veröffentlichungstag und Bekanntmachung des Hinweises auf die Patenterteilung: **30.05.2018**
(21) Anmeldenummer: 12183836.1
(22) Anmeldetag: 11.09.2012
(51) Int. Cl.: A63G 31/16, B25J 11/00, G09B 9/02, G09B 9/32

(54) **Fahrgeschäft und Verfahren zum Betreiben des Fahrgeschäfts**
Fairground ride and method for operating same
Manège et procédé destiné au fonctionnement du manège

(30) Priorität: 28.09.2011 DE 102011083596
(43) Veröffentlichungstag der Anmeldung: 03.04.2013
(73) Patentinhaber: KUKA Roboter GmbH, 86165 Augsburg (DE)
(72) Erfinder: Hasenzahl, Torsten, 89407 Dillingen (DE)
(74) Vertreter: Schlotter, Alexander Carolus Paul

(56) Entgegenhaltungen:
- EP-B1- 1 605 421
- WO-A1-93/09479
- US-A- 4 798 376
- US-A- 5 486 141
- US-A1- 2001 003 102

## Beschreibung

Die Erfindung betrifft ein Fahrgeschäft mit einem Roboter und Verfahren zum Betreiben des Fahrgeschäfts.

Die EP 1 605 421 A2 offenbart ein Fahrgeschäft, welches einen Roboterarm und eine an einer Befestigungsvorrichtung des Roboterarms befestigte Sitzeinheit umfasst. An der Sitzeinheit ist ein Bildwidergabeschirm zur Wiedergabe einer Filmsequenz befestigt, welche einer Bewegung des Roboterarms zugeordnet ist.

Die US 2001/003102 A1 offenbart ein Fahrgeschäft aufweisend eine Fahrgastaufnahme, einen Roboter mit einer Steuervorrichtung, eine Anzeigevorrichtung, welche eingereicht ist, während der Bewegung des Roboters eine Filmsequenz anzuzeigen, welche mehrere, hintereinander folgende Bilder aufweist, wobei in der Steuervorrichtung eine Information über eine Zuordnung zumindest mehrerer der Bilder der Filmsequenz zu entsprechenden Stellungen des Roboters gespeichert ist, und wobei die Steuervorrichtung eingerichtet ist, eine Abweichung des synchronen Anzeigens der Filmsequenz zur Bewegung des Roboters zu erkennen. Die erkannte Abweichung der Synchronisation wird durch die Anpassung der Bewegung des Roboters korrigiert.

Aufgabe der Erfindung ist es, ein verbessertes Fahrgeschäft anzugeben, welches einen Roboter mit einem Roboterarm und einer Steuervorrichtung, und eine Anzeigevorrichtung zum Anzeigen einer Filmsequenz während einer Bewegung des Roboterarms aufweist.

Die Aufgabe der Erfindung wird durch ein Fahrgeschäft nach Anspruch 1 und ein Verfahren nach Anspruch 7 gelöst. Auch offenbart wird ein Fahrgeschäft, aufweisend
- eine Fahrgastaufnahme zur Aufnahme wenigstens einer Person,
- einen Roboter mit einer Steuervorrichtung und einem Roboterarm, welcher mit der Steuervorrichtung verbundene Antriebe und mehrere, mittels der Antriebe bezüglich Achsen relativ zueinander bewegbare Glieder aufweist und an dem die Fahrgastaufnahme befestigbar oder befestigt ist, und die Steuervorrichtung eingerichtet ist, für eine Bewegung des Roboterarms die Antriebe anzusteuern, damit die Glieder während der Bewegung zugeordnete Stellungen der Achsen aufweisen, und
- eine Anzeigevorrichtung, welche eingerichtet ist, während der Bewegung des Roboterarms eine Filmsequenz anzuzeigen, welche mehrere, hintereinander folgende Bilder aufweist, und in der Steuervorrichtung eine Information über eine Zuordnung zumindest mehrerer der Bilder der Filmsequenz zu entsprechenden Stellungen der Achsen des Roboterarms gespeichert ist.

Das offenbarte Fahrgeschäft umfasst demnach den Roboter, der wiederum den Roboterarm und die Steuervorrichtung umfasst. Der Roboter kann z.B. als Industrieroboter ausgeführt sein, an dessen Roboterarm die Fahrgastaufnahme befestigt oder befestigbar ist. Dazu umfasst der Roboterarm beispielsweise eine geeignete Befestigungsvorrichtung. Die Steuervorrichtung ist vorgesehen, den Roboterarm anzusteuern, sodass dieser eine vorgegebene Bewegung durchführt, wodurch die Fahrgastaufnahme ebenfalls eine vorgegebene Bewegung durchführt. Der Bewegung sind entsprechende Stellungen der Achsen des Roboterarms zugeordnet.

Das offenbarte Fahrgeschäft umfasst ferner die Anzeigevorrichtung, mittels derer während der Bewegung des Roboterarms bzw. der Fahrgastaufnahme die der Bewegung zugeordnete Filmsequenz angezeigt wird. Die Anzeigevorrichtung ist z.B. an der Fahrgastaufnahme angeordnet. Die Anzeigevorrichtung umfasst z.B. einen Projektor und eine Leinwand oder einen Bildschirm.

Um z.B. Voraussetzungen für ein verbessertes synchrones Anzeigen der Filmsequenz zur Bewegung des Roboterarms zu erreichen, ist in der Steuervorrichtung die Information über eine Zuordnung zumindest mehrerer der Bilder der Filmsequenz zu entsprechenden Stellungen der Achsen des Roboterarms gespeichert. Somit ist nicht nur einer Zuordnung des ersten Bildes zur entsprechenden Stellung der Achsen bekannt, sondern auch Stellungen der Achsen zu entsprechenden Bildern der Filmsequenz zu späteren Zeitpunkten. Diese Information kann z.B. zu einem Nachsynchronisieren der angezeigten Filmsequenz während der Bewegung des Roboterarms verwendet werden.

Es kann beispielsweise vorgesehen sein, dass die Bilder, über die eine Information über deren zugeordneten Stellungen der Achsen in der Steuervorrichtung gespeichert ist, mit einem der entsprechenden Stellung der Achsen zugeordneten Marker versehen sind.

Aufgrund der in der Steuervorrichtung gespeicherten Information kann nach einer Ausführungsform des offenbarten Fahrgeschäfts dessen Steuervorrichtung eingerichtet sein, während der Bewegung des Roboterarms ein synchrones Anzeigen der Filmsequenz zur Bewegung des Roboterarms aufgrund der Zuordnung der Bilder zu ihren Stellungen der Achsen zu überwachen. Aufgrund des Überwachens kann die Steuervorrichtung gegebenenfalls ein Nachsynchronisieren der angezeigten Filmsequenz während der Bewegung des Roboterarms veranlassen.

Die Steuervorrichtung kann nach einer Variante des offenbarten Fahrgeschäfts eingerichtet sein, eine Abweichung des synchronen Anzeigens der Filmsequenz zur Bewegung des Roboterarms zu erkennen, wenn bei einer aktuellen Stellung der Achsen das aktuell mittels der Anzeigevorrichtung angezeigte Bild dieser Stellung der Achsen nicht zugeordnet ist oder zumindest um eine maximal vorgegebene Anzahl von Bildern abweicht.

Ein weiterer Aspekt der Offenbarung betrifft demnach ein Verfahren zum Betreiben des Fahrgeschäfts, aufweisend folgende Verfahrensschritte:
- Bewegen des Roboterarms derart, dass dieser während des Bewegens der Bewegung zugeordnete Stellungen der Achsen aufweist,
- synchrones Anzeigen der Filmsequenz zur Bewegung des Roboterarms,
- Erkennen einer Abweichung des synchronen Anzeigens der Filmsequenz zur Bewegung des Roboterarms, wenn bei einer aktuellen Stellung der Achsen das aktuell angezeigte Bild dieser Stellung der Achsen nicht zugeordnet ist oder zumindest um eine maximal vorgegebene Anzahl von Bildern abweicht.

Aufgrund der gespeicherten Information über die Zuordnungen der Stellungen der Achsen des Roboterarms zu entsprechenden Bildern der Filmsequenz wird somit eine relativ einfache Überwachung des synchronen Anzeigens der Filmsequenz zur Bewegung des Roboterarms erlaubt.

Wird eine Abweichung erkannt, dann kann es für ein Nachsynchronisieren vorgesehen sein, die Geschwindigkeit der Bewegung des Roboterarms in Abhängigkeit zur erkannten Abweichung anzupassen. Je nach erkannter Abweichung kann demnach die Geschwindigkeit des Roboterarms beschleunigt oder verlangsamt werden.

Zusätzlich oder alternativ kann es auch vorgesehen sein, dass nach einem Erkennen einer Abweichung für ein Nachsynchronisieren vorgesehen ist, die angezeigte Filmsequenz bis zu dem nächsten Bild zu überspringen, welchem eine Stellung der Achsen des Roboterarms zugeordnet ist. Auch ein Wiederholen der angezeigten Filmsequenz ab dem nächst vorherigem Bild, welchem eine Stellung der Achsen des Roboterarms zugeordnet ist, ist möglich.

Nach einer Variante des offenbarten Fahrgeschäfts ist dessen Steuervorrichtung eingerichtet, außerplanmäßig die Bewegung des Roboterarms zu unterbrechen. Dazu kann das Fahrgeschäft, insbesondere dessen Fahrgastaufnahme einen Notaus-Schalter aufweisen. Nach einer solchen außerplanmäßigen Unterbrechung der Bewegung kann es vorgesehen sein, die Bewegung fortzusetzen.

Um Voraussetzungen zu schaffen, dass nach dem Fortsetzen der Bewegung des Roboterarms die restliche Filmsequenz synchron zur Bewegung angezeigt werden kann, ist nach einer Ausführungsform des offenbarten Fahrgeschäfts dessen Steuervorrichtung eingerichtet, nach einem außerplanmäßigen Unterbrechen der Bewegung des Roboterarms denjenigen Anteil der Filmsequenz zu ermitteln, welcher bis zum Unterbrechen bereits mittels der Anzeigevorrichtung angezeigt wurde, und anschließend das Bild der Filmsequenz zu ermitteln, dem eine Stellung der Achsen zugeordnet ist und insbesondere dem letzten vor dem Unterbrechen mittels der Anzeigevorrichtung angezeigten Bild am nächsten ist. Die entsprechende Stellung der Achsen kann vor oder auch nach dem Unterbrechen der Filmsequenz sein.

Um die Bewegung des Roboterarms synchron zur Filmsequenz fortzuführen, ist nach einer Ausführungsform des offenbarten Fahrgeschäfts dessen Steuervorrichtung eingerichtet, diejenige Stellung der Achsen, welche dem ermittelten Bild zugeordnet ist, zu ermitteln, die Antriebe des Roboterarms derart anzusteuern, damit der Roboterarm die ermittelte Stellung der Achsen einnimmt und die Bewegung des Roboterarm fortsetzt, und ein Anzeigen der Filmsequenz, beginnend mit dem ermittelten Bild, mittels der Anzeigevorrichtung zu veranlassen.

Ein weiterer Aspekt der Offenbarung betrifft demnach ein Verfahren zum Betreiben des Fahrgeschäfts, aufweisend folgende Verfahrensschritte:
- Bewegen des Roboterarms derart, dass dieser während des Bewegens der Bewegung zugeordnete Stellungen der Achsen aufweist,
- synchrones Anzeigen der Filmsequenz zur Bewegung des Roboterarms,
- außerplanmäßig Unterbrechen der Bewegung des Roboterarms,
- nach dem außerplanmäßigen Unterbrechen der Bewegung des Roboterarms, Ermitteln desjenigen Anteils der Filmsequenz, welcher bis zum Unterbrechen bereits angezeigt wurde,
- Ermitteln des Bildes der Filmsequenz, dem eine Stellung der Achsen zugeordnet ist und insbesondere dem letzten vor dem Unterbrechen der Bewegung des Roboterarms angezeigten Bildes am nächsten ist,
- Ermitteln derjenigen Stellung der Achsen, welche dem ermittelten Bild zugeordnet ist,
- Bewegen des Roboterarms in eine Stellung entsprechend der ermittelten Stellung der Achsen und Fortsetzten der Bewegung des Roboterarm, und
- beginnend mit dem ermittelten Bild, Fortsetzten des Anzeigens der Filmsequenz.

Gemäß dem offenbarten Fahrgeschäft werden gegebenenfalls dem Film bzw. der Filmsequenz bestimmte, definierte Sequenzpunkte bzw. Marker gegebenenfalls mit einem Soll-Positionssignal der jeweiligen Roboterposition, d.h. Stellungen der Achsen des Roboterarms insbesondere in der Steuervorrichtung hinterlegt.

Gegebenenfalls erkennt die Steuerung oder PLC, d.h. die Steuervorrichtung eine Abbruchsequenz, ermittelt die abgelaufenen Sequenzen während des Stillstands und errechnet die neue Sollposition (Aufsynchronisierungsposition) für einen möglichen Neustart synchron zum Film bzw. zur Filmsequenz. D.h. der Roboter fährt automatisch nach dem Signal "Fortsetzung" auf die nächste mögliche Aufsynchronisierungsposition.

Zusätzlich oder alternativ kann die Steuerung (oder PLC), d.h. die Steuervorrichtung derart ausgeführt sein zu erkennen, ob der Film bzw. die Filmsequenz synchron zur Bewegung läuft. Hierzu werden z.B. definierte Sequenzpunkte bzw. Marker mit einem Soll-Positionssignal der jeweiligen Roboterposition (Stellungen der Achsen) hinterlegt, stetig kontrolliert und bei Abweichung z.B. die Robotergeschwindigkeit zur Aufsynchronisierung angepasst oder beispielsweise die Filmsequenzen bis zur nächstmöglichen Aufsynchronisierungsposition übersprungen.

Ein Ausführungsbeispiel der Erfindung ist exemplarisch in den beigefügten schematischen Figuren dargestellt. Es zeigen:
- Fig. 1: eine Fahrgeschäft mit einem Roboterarm und einer an dem Roboterarm angeordneten Fahrgastaufnahme, und
- Fig. 2: eine Filmsequenz.

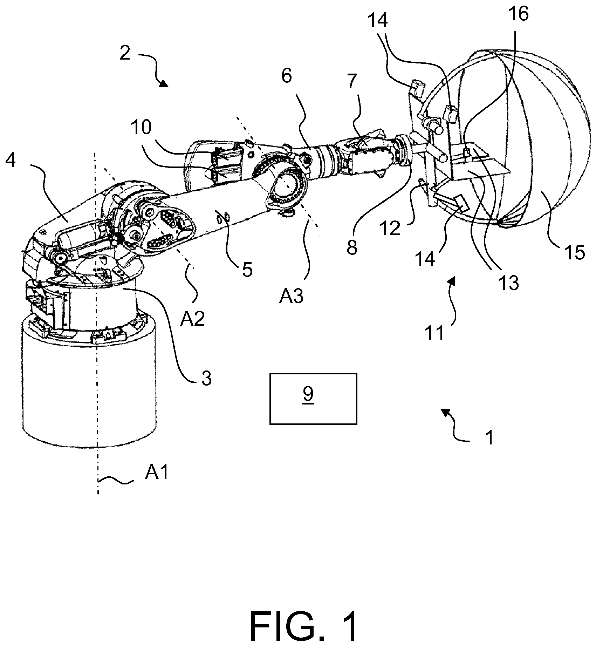

Die Fig. 1 zeigt in einer perspektivischen Darstellung eines Fahrgeschäfts 1, das eine Fahrgastaufnahme 11 und einen Roboter mit einem Roboterarm 2 und einer Steuervorrichtung 9 aufweist.

Der Roboterarm 2 umfasst im Falle des vorliegenden Ausführungsbeispiels mehrere, nacheinander angeordnete und mittels Gelenke verbundene Glieder. Bei den Gliedern handelt es sich insbesondere um ein ortsfestes oder bewegliches, z.B. auf einem Sockel angeordnetes Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer Befestigungsvorrichtung 8, an der die Fahrgastaufnahme 11 befestigt ist. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen, die in der Fig. 1 nicht näher dargestellt sind.

Um den Roboter bzw. dessen Roboterarm 2 zu bewegen, umfasst dieser in allgemein bekannter Weise mit der Steuervorrichtung 9 verbundene Antriebe, die insbesondere elektrische Antriebe sind. In der Figur 1 sind nur einige der elektrischen Motoren 10 dieser Antriebe gezeigt. Auf der Steuervorrichtung 9 läuft ein Rechenprogramm, mittels dem die Steuervorrichtung 9 im Betrieb des Roboters diesen beispielsweise derart ansteuert, dass die Befestigungsvorrichtung 8 oder ein sogenannter Tool Center Point und somit die Fahrgastaufnahme 11 eine vorbestimmte Bewegung ausführen. Gegebenfalls regelt die Steuervorrichtung 9 die Antriebe. Die Antriebe können auch geregelte Antriebe sein, wobei die Steuervorrichtung 9 Sollwerte für die einzelnen Antriebe berechnet und diese den Antrieben übermittelt.

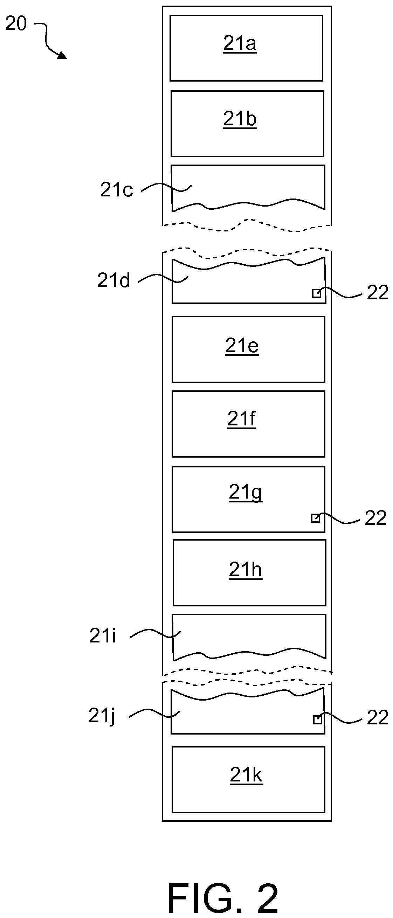

Im Falle des vorliegenden Ausführungsbeispiels weist die Fahrgastaufnahme 11 ein Gestell 12 und zwei am Gestell 12 befestigte Sitzen 13 auf, auf denen sich zwei Personen setzten können, um mittels des Fahrgeschäftes 1 bewegt zu werden. Die Fahrgastaufnahme 11 umfasst beispielsweise zwei am Gestell 12 oder an den Sitzen 13 befestigte Lautsprecher 14, um während einer Bewegung des Roboterarms 2 die Bewegung akustisch zu untermalen. Des Weiteren weist die Fahrgastaufnahme 11 eine Anzeigevorrichtung zum Anzeigen einer in der Fig. 2 gezeigten Filmsequenz 20 auf.

Die Anzeigevorrichtung umfasst im Falle des vorliegenden Ausführungsbeispiels einen beispielsweise am Gestellt 12 befestigten Filmprojektor 14, welcher eingerichtet ist, die Filmsequenz 20 auf einer z.B. am Gestell 12 befestigten Leinwand 15 zu projizieren. Die Leinwand 15 ist z.B. gewölbt. Als Anzeigevorrichtung kann aber beispielsweise auch ein Bildschirm, insbesondere wenigstens ein Flachbildschirm verwendet werden.

Das Fahrgeschäft 1 ist eingerichtet, mittels seines Roboterarms 2 und gesteuert durch die Steuervorrichtung 9 die Fahrgastaufnahme 11 gemäß einer vorbestimmten Bewegung zu bewegen. Dazu steuert, wie bereits erläutert, die Steuervorrichtung 9 die Antriebe des Roboterarms 2 geeignet an.

Des Weiteren ist es vorgesehen, während der Bewegung des Roboterarms 2 auf der Leinwand 15 die Filmsequenz 20 zu projizieren. Die Filmsequenz 20 ist der Bewegung des Roboterarms 2 zugeordnet bzw. die Filmsequenz 20 läuft synchron zur Bewegung des Roboterarms 2. Des Weiteren kann es vorgesehen sein, dass die Steuervorrichtung 9 den Roboterarm 2 gemäß auswählbarer unterschiedlicher Bewegungen ansteuert und dass diesen unterschiedlichen Bewegungen jeweils unterschiedliche Filmsequenzen 20 zugeordnet sind. Um die fragliche Filmsequenz 20 der Bewegung zuzuordnen, ist z.B. der Projektor 14 mit der Steuervorrichtung 9 verbunden, sodass diese den Projektor 14 ansteuern kann. Die wenigstens eine Filmsequenz 20 kann z.B. in der Steuervorrichtung 9 gespeichert sein und zur Wiedergabe an den Projektor 14 übermittelt werden. Die Filmsequenz 20 kann aber auch in einem dem Projektor 14 zugeordneten Speicher oder Widergabegerät gespeichert sein, welche bzw. welches insbesondere mit dem Steuerrechner 9 verbunden ist.

Die Filmsequenz 20 umfasst eine Mehrzahl von Bildern 21a-k, welche, wenn zeitlich nacheinander, beginnend mit dem Bild 21a auf die Leinwand 15 projiziert, die wiedergegebene Filmsequenz 20 ergeben. Um auch während der Bewegung des Roboterarms 2 ein Nachsynchronisieren der Filmsequenz 20 relativ zur Bewegung des Roboterarms 2 zu erlauben, sind zuminderst ein paar der Bilder 21a-k, wenn nicht gar alle, entsprechenden Stellungen der Achsen A1-A3 (Achsenstellungen) des Roboterarms 2 während der Bewegung desselben zugeordnet bzw. sind zuminderst ein paar der Bilder 21a-k, wenn nicht gar alle, entsprechenden Lagen (Positionen und Orientierungen) der Befestigungsvorrichtung 8 bzw. des Tool Center Points des Roboterarms 2 bzw. der Fahrgastaufnahme 11 zugeordnet. Dies wird im Falle des vorliegenden Ausführungsbeispiels dadurch erreicht, dass einige, wenn nicht gar alle Bilder 21a-k mit einer Markierung 22 versehen sind, wodurch eine eindeutige Zuordnung dieser Bilder 21a-k zu den entsprechenden Lagen bzw. Achsenstellungen erreicht wird. Diese Zuordnung ist z.B. in der Steuervorrichtung 9 hinterlegt. Somit sind der Filmsequenz 20 definierte Sequenzpunkte entsprechenden Achsenstellungen bzw. Lagen hinterlegt. Diese Zuordnung kann z.B. dadurch realisiert sein, dass den Achsenstellungen bzw. Lagen zugeordneten, von der Steuervorrichtung 9 erzeugten Soll-Positionssignalen für die Antriebe des Roboterarms 2 die jeweiligen Sequenzpunkte bzw. Marker 22 zugeordnet sind. Dadurch wird insbesondere erreicht, dass einer Soll-Lage der Fahrgastaufnahme 11 eindeutig ein entsprechendes Bild 21a-k der Filmsequenz 20 zugeordnet ist. Die Sequenzpunkte bzw. Marker 22 können z.B. in bestimmten Zeitintervallen und/oder bei jedem Wechsel der Lage des Tool Center Points gesetzt sein.

Im Falle des vorliegenden Ausführungsbeispiels ist es vorgesehen, die Bewegung des Roboterarms 2, gesteuert durch die Steuervorrichtung 9 synchron zur wiedergegebenen Filmsequenz 20 durchzuführen. Dazu wird insbesondere die Bewegung des Roboterarms 2 synchron zur Filmsequenz 20, also mit dessen Bild 21a gestartet. Während der Bewegung des Roboterarms 2 steuert im Falle des vorliegenden Ausführungsbeispiels die Steuervorrichtung 9 nicht nur die Bewegung des Roboterarms 2, sondern überwacht die Steuervorrichtung 9, ob die Filmsequenz 20 synchron zur Bewegung des Roboterarms 2 an der Leinwand 15 angezeigt wird bzw. ob die Bewegung des Roboterarms 2 synchron zur angezeigten Filmsequenz 20 durchgeführt wird. Dazu ist gegebenenfalls die Steuervorrichtung 9 mit dem Projektor 14 verbunden. Aufgrund der jeweiligen Sequenzpunkte bzw. Marker 22 der Bilder 21a-k wird es der Steuervorrichtung 9 erlaubt, die synchrone Bewegung zu überwachen.

Im Falle des vorliegenden Ausführungsbeispiels ist die Steuervorrichtung 9 außerdem derart eingerichtet, eine Abweichung der synchronen Bewegung des Roboterarms 2 relativ zur angezeigten Filmsequenz 20 zu erkennen, wenn z.B. bei einer aktuellen Soll-Achsenstellung das aktuell angezeigte Bild 21a-k dieser Achsenstellung bzw. dieser Lage des Tool Center Points nicht entspricht bzw. zugeordnet ist oder zumindest um eine maximal vorgegebene Anzahl von Bildern 21a-k abweicht. Dazu läuft z.B. auf der Steuervorrichtung 9 ein geeignetes Rechenprogramm.

Erkennt die Steuervorrichtung 9 eine Abweichung, dann ist es im Falle des vorliegenden Ausführungsbeispiels vorgesehen, dass die Steuervorrichtung 9 die Geschwindigkeit der Bewegung des Roboterarms 2 entsprechend der Abweichung der Synchronisation anpasst, also entsprechend der Abweichung die Bewegung schnelle oder langsamer ausführt. Es ist aber auch möglich, die angezeigte Filmsequenz 20 bis zu dem Bild 21a-k, welches den nächstmöglichen Marker 22 aufweist, zu überspringen oder ab dem nächst vorigen Bild 21a-k, welchem eine Stellung der Achsen A1-A3 des Roboterarms 2 zugeordnet ist, zu wiederholen.

Alternativ oder zusätzlich können die Sequenzpunkte bzw. Marker 22 auch verwendet werden, nach einer außerplanmäßigen Unterbrechung der Bewegung des Roboterarms 2 die Bewegung des Roboterarms 2 mit synchronem Anzeigen der restlichen Filmsequenz 20 fortzuführen.

Um die Bewegung außerplanmäßig zu stoppen, umfasst beispielsweise die Fahrgasaufnahme 11 einen mit der Steuervorrichtung 9 verbundenen Notaus-Schalter 16, mittels dem die mittels der Fahrgastaufnahme 11 beförderten Personen die Bewegung des Roboterarms 2 stoppen bzw. unterbrechen können. Eine außerplanmäßige Unterbrechung der Bewegung des Roboterarms 2 kann aber z.B. auch durch eine automatische Unterbrechung durch die Steuervorrichtung 9 erfolgen.

Im Falle des vorliegenden Ausführungsbeispiels wird ein Fortführen der Bewegung des Roboterarms 2 mit synchroner Darstellung der Filmsequenz 20 folgendermaßen realisiert:
Nach der außerplanmäßigen Unterbrechung der Bewegung des Roboterarms 2 ermittelt die Steuervorrichtung 9 denjenigen Anteil der Filmsequenz 20, welcher bis zur Unterbrechung bereits angezeigt wurde. D.h. die Steuervorrichtung 9 ermittelt diejenigen Bilder 21a-k, die bis zur Unterbrechung der Bewegung des Roboterarms 2 bereits dargestellt wurden.

Danach ermittelt die Steuervorrichtung 9 das Bild 21a-k mit einem Marker 22, welches dem letzten angezeigten Bild 21a-k vor der Unterbrechung am nächsten ist. Dies kann ein noch nicht gezeigtes Bild 21a-k oder ein bereits gezeigtes Bild 21a-k sein.

Anschließend ermittelt die Steuervorrichtung 9 diejenige Achsenstellung bzw. Lage des Tool Center Points, welche dem ermittelten Bild 21a-k zugeordnet ist.

Soll die Bewegung des Roboterarms 2 fortgeführt werden, so wird der Roboterarm 2, gesteuert von der Steuervorrichtung 9 in diese Achsenstellung bewegt, indem die Steuervorrichtung 9 beispielsweise die Antriebe des Roboterarms 2 entsprechend ansteuert bzw. den Antrieben entsprechende Soll-Werte übermittelt.

Anschließend steuert die Steuervorrichtung 9 die Antriebe des Roboterarms 2 derart an, sodass dieser die unterbrochene Bewegung fortführt. Gleichzeitig steuert die Steuervorrichtung 9 den Projektor 14 derart an, sodass dieser die Filmsequenz 20, beginnend mit dem ermittelten Bild 21a-k, auf die Leinwand 15 projiziert.

## Patentansprüche

1. Fahrgeschäft, aufweisend
- eine Fahrgastaufnahme (11) zur Aufnahme wenigstens einer Person,
- einen Roboter mit einer Steuervorrichtung (9) und einem Roboterarm (2), welcher mit der Steuervorrichtung (9) verbundene Antriebe und mehrere, mittels der Antriebe bezüglich Achsen (A1-A3) relativ zueinander bewegbare Glieder (3-7) aufweist und an dem die Fahrgastaufnahme (11) befestigbar oder befestigt ist, und die Steuervorrichtung (9) eingerichtet ist, für eine Bewegung des Roboterarms (2) die Antriebe anzusteuern, damit die Glieder (3-7) während der Bewegung der Bewegung zugeordnete Stellungen der Achsen (A1-A3) aufweisen, und
- eine Anzeigevorrichtung (14, 15), welche eingerichtet ist, während der Bewegung des Roboterarms (2) eine Filmsequenz (20) anzuzeigen, welche mehrere, hintereinander folgende Bilder (21a-k) aufweist,
wobei in der Steuervorrichtung (9) eine Information über eine Zuordnung zumindest mehrerer der Bilder (21a-k) der Filmsequenz (20) zu entsprechenden Stellungen der Achsen (A1-A3) des Roboterarms (2) gespeichert ist,
wobei die Steuervorrichtung (9) eingerichtet ist, eine Abweichung des synchronen Anzeigens der Filmsequenz (20) zur Bewegung des Roboterarms (2) zu erkennen, wenn bei einer aktuellen Stellung der Achsen (A1-A3) das aktuell mittels der Anzeigevorrichtung (14, 15) angezeigte Bild (21a-k) dieser Stellung der Achsen (A1-A3) nicht zugeordnet ist oder zumindest um eine maximal vorgegebene Anzahl von Bildern (21a-k) abweicht und wobei die Steuervorrichtung (9) eingerichtet ist,
- nach einem Erkennen der Abweichung ein Überspringen der Filmsequenz (20) bis zu dem nächsten Bild (21a-k), welchem eine Stellung der Achsen (A1-A3) des Roboterarms (2) zugeordnet ist, zu veranlassen, um das angezeigte Bild (21a - k) und die Stellung der Achsen (A1-A3) zu synchronisieren, oder
- nach einem Erkennen der Abweichung ein Wiederholen der Filmsequenz (20) ab dem nächst vorherigen Bild (21a-k), welchem eine Stellung der Achsen (A1-A3) des Roboterarms (2) zugeordnet ist, zu veranlassen, um das angezeigte Bild (21a - k) und die Stellung der Achsen (A1-A3) zu synchronisieren.

2. Fahrgeschäft nach Anspruch 1, bei dem die Bilder (21a-k), über die eine Information über deren zugeordnete Stellungen der Achsen (A1-A3) in der Steuervorrichtung (9) gespeichert ist, mit einem den entsprechenden Stellungen der Achsen (A1-A3) zugeordneten Marker (22) versehen sind.

3. Fahrgeschäft nach Anspruch 1 oder 2, bei dem die Steuervorrichtung (9) eingerichtet ist, während der Bewegung des Roboterarms (2) ein synchrones Anzeigen der Filmsequenz (20) zur Bewegung des Roboterarms (2) aufgrund der Zuordnung der Bilder (21a-k) zu ihren Stellungen der Achsen (A1-A3) zu überwachen.

4. Fahrgeschäft nach einem der Ansprüche 1 bis 3, bei dem die Steuervorrichtung (9) eingerichtet ist, außerplanmäßig die Bewegung des Roboterarms (2) zu unterbrechen, nach einem außerplanmäßigen Unterbrechen der Bewegung des Roboterarms (2) denjenigen Anteil der Filmsequenz (20), welcher bis zum Unterbrechen bereits mittels der Anzeigevorrichtung (14, 15) angezeigt wurde, zu ermitteln, das Bild (21a-k) der Filmsequenz (20), dem eine Stellung der Achsen (A1-A3) zugeordnet ist und dem letzten vor dem Unterbrechen mittels der Anzeigevorrichtung angezeigten Bild (21a-k) am nächsten ist zu ermitteln.

5. Fahrgeschäft nach Anspruch 4, bei dem die Steuervorrichtung (9) eingerichtet ist, diejenige Stellung der Achsen (A1-A3), welche dem ermittelten Bild (21a-k) zugeordnet ist, zu ermitteln, die Antriebe des Roboterarms (2) derart anzusteuern, damit der Roboterarm (2) die ermittelte Stellung der Achsen (A1-A3) einnimmt und die Bewegung des Roboterarm (2) fortsetzt, und ein Anzeigen der Filmsequenz (20), beginnend mit dem ermittelten Bild (21a-k), mittels der Anzeigevorrichtung (14, 15) zu veranlassen.

6. Fahrgeschäft nach einem der Ansprüche 1 bis 5, bei dem der Roboterarm (2) ein ortsfestes oder bewegliches Gestell (3), ein relativ zum Gestell (3) um eine vertikal verlaufende Achse (A1) drehbar gelagertes Karussell 4, eine Schwinge (5), ein Ausleger (6) und eine Roboterhand (7) mit einer Befestigungsvorrichtung (8), an der die Fahrgastaufnahme (11) befestigbar oder befestigt ist, aufweist.

7. Verfahren zum Betreiben eines Fahrgeschäfts, das eine Fahrgastaufnahme (11) zur Aufnahme wenigstens einer Person, einen Roboter mit einer Steuervorrichtung (9) und einem Roboterarm (2), welcher mit der Steuervorrichtung (9) verbundene Antriebe und mehrere, mittels der Antriebe bezüglich Achsen (A1-A3) relativ zueinander bewegbare Glieder (3-7) aufweist und an dem die Fahrgastaufnahme (11) befestigbar oder befestigt ist, und die Steuervorrichtung (9) eingerichtet ist, für eine Bewegung des Roboterarms (2) die Antriebe anzusteuern, damit die Glieder (3-7) während der Bewegung der Bewegung zugeordnete Stellungen der Achsen (A1-A3) aufweisen, und eine Anzeigevorrichtung (14, 15) umfasst, welche eingerichtet ist, während der Bewegung des Roboterarms (2) eine Filmsequenz (20) anzuzeigen, welche mehrere, hintereinander folgende Bilder (21a-k) aufweist, und in der Steuervorrichtung (9) eine Information über eine Zuordnung zumindest mehrerer der Bilder (21a-k) der Filmsequenz (20) zu entsprechenden Stellungen der Achsen (A1-A3) des Roboterarms (2) gespeichert ist, aufweisend folgende Verfahrensschritte:
- Bewegen des Roboterarms (2) derart, dass dieser während des Bewegens der Bewegung zugeordnete Stellungen der Achsen (A1-A3) aufweist,
- synchrones Anzeigen der Filmsequenz (20) zur Bewegung des Roboterarms (2),
- Erkennen einer Abweichung des synchronen Anzeigens der Filmsequenz (20) zur Bewegung des Roboterarms (2), wenn bei einer aktuellen Stellung der Achsen (A1-A3) das aktuell angezeigte Bild (21a-k) dieser Stellung der Achsen (A1-A3) nicht zugeordnet ist oder zumindest um eine maximal vorgegebene Anzahl von Bildern (21a-k) abweicht, und
- Überspringen der angezeigten Filmsequenz (20) bis zu dem nächsten Bild (21a-k), welchem eine Stellung der Achsen (A1-A3) des Roboterarms (2) zugeordnet ist, um das angezeigte Bild (21a-k) und die Stellung der Achsen (A1-A3) zu synchronisieren, oder Wiederholen der angezeigten Filmsequenz (20) ab dem nächst vorigen Bild (21a-k), welchem eine Stellung der Achsen (A1-A3) des Roboterarms (2) zugeordnet ist, um das angezeigte Bild (21a-k) und die Stellung der Achsen (A1-A3) zu synchronisieren.

8. Verfahren nach Anspruch 7, aufweisend folgende Verfahrensschritte:
- außerplanmäßiges Unterbrechen der Bewegung des Roboterarms (2),
- nach dem außerplanmäßigen Unterbrechen der Bewegung des Roboterarms (2), Ermitteln desjenigen Anteils der Filmsequenz (20), welcher bis zum Unterbrechen bereits angezeigt wurde,
- Ermitteln des Bildes (21a-k) der Filmsequenz (20), dem eine Stellung der Achsen (A1-A3) zugeordnet ist und dem letzten vor dem Unterbrechen der Bewegung des Roboterarms (2) angezeigten Bildes (21a-k) am nächsten ist,
- Ermitteln derjenigen Stellung der Achsen (A1-A3), welche dem ermittelten Bild (21a-k) zugeordnet ist,
- Bewegen des Roboterarms (2) in eine Stellung entsprechend der ermittelten Stellung der Achsen (A1-A3) und Fortsetzten der Bewegung des Roboterarm (2), und
- beginnend mit dem ermittelten Bild (21a-k), Fortsetzten des Anzeigens der Filmsequenz (20).

## Claims

1. A ride, comprising
- a passenger receptacle (11) for accommodating at least one person,
- a robot with a control device (9) and a robot arm (2) which comprises drive units connected to the control device (9) and several members (3-7) which are movable with respect to each other in relation to axes (A1-A3) by means of the drive units and to which the passenger receptacle (11) is attachable or attached, and the control device (9) is arranged, in order to perform a movement of the robot arm (2), to control the drive units so that during the movement the members (3-7) have positions of the axes (A1-A3) which correspond to the movement, and
- a display device (14, 15) which is arranged to display a film sequence (20) during the movement of the robot arm (2), which film sequence comprises several successive pictures (21a-k),
wherein information regarding an association of at least several ones of the pictures (21a-k) of the film sequence (20) with corresponding positions of the axes (A1-A3) of the robot arm (2) is stored in the control device (9),
wherein the control device (9) is arranged to detect a discrepancy of the synchronous displaying of the film sequence (20) in relation to the movement of the robot arm (2) when, given a current position of the axes (A1-A3), the currently displayed picture (21a-k) displayed by the display device (14, 15) does not correspond to said position of the axes (A1-A3) or is offset by at least a maximum specified number of pictures (21a-k) and wherein the control device (9) is arranged,
- on detecting the discrepancy, to cause the film sequence (20) to skip to the next picture (21a-k) with which a position of the axes (A1-A3) of the robot arm (2) is associated, in order to synchronize the displayed picture (21a-k) and the position of the axes (A1 -A3), or
- on detecting the discrepancy, to cause a repeat of the film sequence (20) from the next previous picture (21a-k) with which a position of the axes (A1-A3) of the robot arm (2) is associated in order to synchronize the displayed picture (21a-k) and the position of the axes (A1-A3).

2. The ride according to claim 1, wherein the pictures (21a-k) for which information regarding their associated positions of the axes (A1-A3) is stored in the control device (9) are provided with a marker (22) associated with corresponding positions of the axes (A1-A3).

3. The ride according to claim 1 or 2, wherein the control device (9) is arranged to monitor, during the movement of the robot arm (2), displaying of the film sequence (20) which is synchronized with the movement of the robot arm (2) on the basis of the association of the pictures (21a-k) with their position of the axes (A1-A3).

4. The ride according to any one of the claims 1 to 3, wherein the control device (9) is arranged to make an unscheduled interruption of the movement of the robot arm (2), after an unscheduled interruption of the movement of the robot arm (2) to determine that portion of the film sequence (20) which had already been displayed by means of the display device (14, 15), up until the interruption, to determine the picture (21a-k) of the film sequence (20) with which a position of the axes (A1-A3) is associated and which is nearest to the last picture (21a-k) displayed by the display device before the interruption.

5. The ride according to claim 4, wherein the control device (9) is arranged to determine the position of the axes (A1-A3) which is associated with the picture (21a-k) that has been determined, to control the drive units of the robot arm (2) in such a way that the robot arm (2) assumes the position of the axes (A1 -A3) that has been determined and resumes the movement of the robot arm (2), and to cause the film sequence (20) to be displayed by means of the display device (14, 15) starting with the picture (21a-k) that has been determined.

6. The ride according to any one of the claims 1 to 5, wherein the robot arm (2) comprises a fixed or a movable base (3), a carousel (4) which, relative to the base (3), is rotatably mounted around a vertically extending axis (A1), a pivot arm (5), a cantilever arm (6) and a robotic hand (7) with a fixing device (8) to which the passenger receptacle (11) is mountable or to which it is mounted.

7. A method of operating a ride which comprises a passenger receptacle (11) for accommodating at least one person, a robot with a control device (9) and a robot arm (2) which comprises drive units connected to the control device (9) and several members (3-7) which are movable with respect to each other in relation to axes (A1-A3) by means of the drive units and to which the passenger receptacle (11) is attachable or attached, and the control device (9) is arranged, in order to perform a movement of the robot arm (2), to control the drive units so that during the movement the members (3-7) have positions of the axes (A1-A3) which correspond to the movement, and a display device (14, 15) which is arranged to display a film sequence (20) during the movement of the robot arm (2), which film sequence comprises several successive pictures (21a-k), wherein information regarding an association of at least several ones of the pictures (21a-k) of the film sequence (20) with corresponding positions of the axes (A1-A3) of the robot arm (2) is stored in the control device (9), wherein the method comprises the following process steps:
- moving the robot arm (2) in such a way that, during said movement, said robot arm has positions of the axes (A1-A3) corresponding to said movement,
- displaying the film sequence (20) in a manner which is synchronized with respect to the movement of the robot arm (2),
- detecting a discrepancy of the synchronous displaying of the film sequence (20) in relation to the movement of the robot arm (2) when, given a current position of the axes (A1-A3), the currently displayed picture (21a-k) does not correspond to said position of the axes (A1-A3) or is offset by at least a maximum specified number of pictures (21a-k), and
- causing the displayed film sequence (20) to skip to the next picture (21a-k) with which a position of the axes (A1-A3) of the robot arm (2) is associated, in order to synchronize the displayed picture (21a-k) and the position of the axes (A1-A3), or repeating the displayed film sequence (20) from the next previous picture (21a-k) with which a position of the axes (A1-A3) of the robot arm (2) is associated, in order to synchronize the displayed picture (21a-k) and the position of the axes (A1-A3).

8. The method according to claim 7, comprising the following process steps:
- making an unscheduled interruption of the movement of the robot arm (2),
- after the unscheduled interruption of the movement of the robot arm (2), determining that portion of the film sequence (20) which had already been displayed up to the interruption,
- determining the picture (21a-k) of the film sequence (20) with which a position of the axes (A1-A3) is associated and which is nearest to the last picture (21a-k) displayed prior to the interruption of the movement of the robot arm (2),
- determining the position of the axes (A1-A3) which is associated with the picture (21a-k) that has been determined,
- moving the robot arm (2) into a position corresponding to the position of the axes (A1-A3) which has been determined, and resuming the movement of the robot arm (2), and
- resuming the displaying of the film sequence (20) starting with the picture (21a-k) which has been determined.

## Revendications

1. Manège, présentant
- un logement de passager (11) pour la réception d'au moins une personne,
- un robot avec un dispositif de commande (9) et un bras de robot (2), lequel présente des entraînements reliés au dispositif de commande (9) et plusieurs éléments (3-7) mobiles l'un par rapport à l'autre par rapport à des axes (A1-A3) au moyen des entraînements et au niveau duquel le logement de passager (11) peut être fixé ou est fixé, et le dispositif de commande (9) est aménagé pour commander les entraînements pour un mouvement du bras de robot (2), pour que les éléments (3-7) présentent des positions des axes (A1-A3) associées au mouvement pendant le mouvement, et
- un dispositif d'affichage (14, 15), lequel est aménagé pour afficher une séquence de film (20) pendant le mouvement du bras de robot (2), laquelle présente plusieurs images successives (21a-k),
dans lequel une information sur une association d'au moins plusieurs des images (21a-k) de la séquence de film (20) à des positions correspondantes des axes (A1-A3) du bras de robot (2) est enregistrée dans le dispositif de commande (9),
dans lequel le dispositif de commande (9) est aménagé pour détecter une divergence de l'affichage synchrone de la séquence de film (20) par rapport au mouvement du bras de robot (2), lorsque pour une position actuelle des axes (A1-A3), l'image (21a-k) actuellement affichée au moyen du dispositif d'affichage (14, 15) n'est pas associée à cette position des axes (A1-A3) ou diverge d'au moins un nombre maximum prédéfini d'images (21a-k) et dans lequel le dispositif de commande (9) est aménagé
- après une détection de la divergence, pour entraîner un saut de la séquence de film (20) jusqu'à la prochaine image (21a-k), à laquelle est associée une position des axes (A1-A3) du bras de robot (2) pour synchroniser l'image affichée (21a-k) et la position des axes (A1-A3), ou
- après une détection de la divergence, pour entraîner une répétition de la séquence de film (20) à partir de la dernière image (21a-k), à laquelle est associée une position des axes (A1-A3) du bras de robot (2) pour synchroniser l'image affichée (21a-k) et la position des axes (A1-A3).

2. Manège selon la revendication 1, dans lequel les images (21a-k), sur lesquelles une information sur leurs positions associées des axes (A1-A3) est enregistrée dans le dispositif de commande (9), sont dotées d'un marqueur (22) associé aux postions correspondantes des axes (A1-A3).

3. Manège selon la revendication 1 ou 2, dans lequel le dispositif de commande (9) est aménagé pour surveiller pendant le mouvement du bras de robot (2) un affichage synchrone de la séquence de film (20) par rapport au mouvement du bras de robot (2) sur la base de l'association des images (21a-k) à leurs positions des axes (A1-A3).

4. Manège selon l'une quelconque des revendications 1 à 3, dans lequel le dispositif de commande (9) est aménagé pour interrompre de façon non programmée le mouvement du bras de robot (2), pour déterminer après une interruption non programmée du mouvement du bras de robot (2), la part de la séquence de film (20), qui a déjà été affichée au moyen du dispositif d'affichage (14, 15) jusqu'à l'interruption, pour déterminer l'image (21a-k) de la séquence de film (20), à laquelle est associée une position des axes (A1-A3) et qui est la plus proche la dernière image (21a-k) affichée au moyen du dispositif d'affichage avant l'interruption.

5. Manège selon la revendication 4, dans lequel le dispositif de commande (9) est aménagé pour déterminer la position des axes (A1-A3), qui est associée à l'image déterminée (21a-k), pour commander les entraînements du bras de robot (2) de sorte que le bras de robot (2) adopte la position déterminée des axes (A1-A3) et poursuit le mouvement du bras de robot (2), et pour entraîner un affichage de la séquence de film (20), en commençant par l'image déterminée (21a-k) au moyen du dispositif d'affichage (14, 15).

6. Manège selon l'une quelconque des revendications 1 à 5, dans lequel le bras de robot (2) présente un bâti (3) fixe ou mobile, un carrousel (4) logé de manière rotative autour d'un axe vertical (A1) par rapport au bâti (3), un bras oscillant (5), une flèche (6) et une main de robot (7) avec un dispositif de fixation (8), auquel le logement de passager (11) peut être fixé ou est fixé.

7. Procédé d'exploitation d'un manège, qui comprend un logement de passager (11) pour la réception d'au moins une personne, un robot avec un dispositif de commande (9) et un bras de robot (2), lequel présente des entraînements reliés au dispositif de commande (9) et plusieurs éléments (3-7) mobiles l'un par rapport à l'autre par rapport à des axes (A1-A3) au moyen des entraînements et au niveau duquel le logement de passager (11) peut être fixé ou est fixé, et le dispositif de commande (9) est aménagé pour commander les entraînements pour un mouvement du bras de robot (2), pour que les éléments (3-7) présentent des positions des axes (A1-A3) associées au mouvement pendant le mouvement, et un dispositif d'affichage (14, 15), lequel est aménagé pour afficher une séquence de film (20) pendant le mouvement du bras de robot (2), laquelle présente plusieurs images successives (21a-k), et une information sur une association d'au moins plusieurs des images (21a-k) de la séquence de film (20) à des positions correspondantes des axes (A1-A3) du bras de robot (2) est enregistrée dans le dispositif de commande (9), présentant les étapes de procédé suivantes :
- mouvement du bras de robot (2) de sorte que celui-ci présente des positions des axes (A1-A3) associées au mouvement pendant le mouvement,
- affichage synchrone de la séquence de film (20) pour le mouvement du bras de robot (2),
- détection d'une divergence de l'affichage synchrone de la séquence de film (20) par rapport au mouvement du bras de robot (2), lorsque pour une position actuelle des axes (A1-A3), l'image (21a-k) actuellement affichée n'est pas associée à cette position des axes (A1-A3) ou diverge d'au moins un nombre maximum prédéfini d'images (21a-k), et
- saut de la séquence de film (20) jusqu'à la prochaine image (21a-k), à laquelle est associée une position des axes (A1-A3) du bras de robot (2) pour synchroniser l'image affichée (21a-k) et la position des axes (A1-A3), ou répétition de la séquence de film (20) à partir de la dernière image (21a-k), à laquelle est associée une position des axes (A1-A3) du bras de robot (2) pour synchroniser l'image affichée (21a-k) et la position des axes (A1-A3).

8. Procédé selon la revendication 7, présentant les étapes de procédé suivantes :
- interruption non programmée du mouvement du bras de robot (2),
- après l'interruption non programmée du mouvement du bras de robot (2), détermination de la part de la séquence d'image (20), qui a déjà été affichée jusqu'à l'interruption,
- détermination de l'image (21a-k) de la séquence de film (20), à laquelle est associée une position des axes (A1-A3) et qui est la plus proche la dernière image (21a-k) affichée avant l'interruption du mouvement du bras de robot (2),
- détermination de la position des axes (A1-A3) qui est associée à l'image déterminée (21a-k),
- déplacement du bras de robot (2) dans une position correspondant à la position déterminée des axes (A1-A3) et poursuite du mouvement du bras de robot (2), et
- poursuite de l'affichage de la séquence de film (20), en commençant par l'image déterminée (21a-k).
